# EUROPEAN PATENT APPLICATION

(11) **EP 3 395 495 A1**
(43) Date of publication of application: **31.10.2018**
(21) Application number: 16877643.3
(22) Date of filing: 15.12.2016
(51) Int. Cl.: B23P 9/00, B24B 1/04

(54) **ULTRASONIC MACHINING METHOD FOR IMPROVING ABRADABILITY OF WHEEL OF LOCOMOTIVE, AND APPLICATIONS**

(30) Priority: 22.12.2015 CN 201510975217; 22.12.2015 CN 201510971350
(71) Applicant: Shandong Huawin Electrical & Mechanical Technology Co., Ltd., Jinan, Shandong 250101 (CN)
(72) Inventor: ZHAO, Xianhua, Jinan Shandong 250101 (CN); XIE, Xiangke, Jinan Shandong 250101 (CN); LIU, Xiujuan, Jinan Shandong 250101 (CN); ZHAO, Zhiming, Jinan Shandong 250101 (CN); MA, Ran, Jinan Shandong 250101 (CN); WANG, Aifu, Jinan Shandong 250101 (CN); WANG, Yang, Jinan Shandong 250101 (CN)
(74) Representative: Proi World Intellectual Property GmbH
(86) International application number: PCT/CN2016/109987
(87) International publication number: WO 2017/107832

(57) **Abstract**

An ultrasonic machining method to improve the wear resistance of locomotive wheels includes ultrasonic machining by ultrasonic machining tool head on the wheel rim and/or surface of the tread that is rotated along the main axis. The ultrasonic machining method mentioned in the invention can not only process the locomotive wheel just after leaving factory, but also repair the worn locomotive wheel. After machining the rim and/or tread of the locomotive wheel with ultrasonic machining, the surface tensile stress of the rim and/or the tread surface will become compressive stress, the surface roughness will be greatly reduced, and the ideal compressive stress will be preset on the surface. Which will improves the hardness of the surface, refines the grain, significantly increases the wear resistance, improves the wheel-rail contact relationship, reduces the rolling contact fatigue damage of the wheelset, reduces the wear rate of the wheel, and prolongs the wheel repair cycle and service life.

## Description

### Technical Field

The invention relates to an ultrasonic machining method and application to improve the wear resistance of locomotive wheels, which belongs to the technical field of ultrasonic metal surface processing.

### Background Technology

As is well-known, the railway transport is based on the wheel/rail interaction of adhesive tractive force and adhesive braking force in order to realize the train running, because of the frictional wear between the wheel/rail it consumes a lot of energy, and the cost is also very huge in the railway transportation. With the development of railway transportation to high speed and heavy load, the risk of accidents caused by frictional wear is also increasing. All kinds of damage caused by rail contact surface not only shorten the service life of wheel and rail, but also cause wheel and rail failure after serious wear, which endangers driving safety.

The wheel is an important part of railway rolling stock. In the train operation, wheel rolling will cause the wheel tread and wheel rim to wear out, and the wheel slide on the rail will cause the tread damage. According to the statistics of failure analysis, the main types of wheel damage of railway locomotive are wheel rim wear, rim fatigue crack, thermal damage, wheel tread peeling and disintegration, etc.

The wheel rim is an important part of the wheel and plays an important role in the safety and stability of the train, so that the wheel can reliably pass the curve and the turnout. The abnormal abrasion of wheel rim will change the normal track relationship and reduce the vehicle power performance and the comfort level.

When the train is passing through curves and turnouts, part of the force of the rail on the wheel is on the tread of the wheel, and the other part operates on the rim of the wheel. In this case, the wheel rim is wearing the fastest. The basis of locomotive wheel spinning fix is judged by detecting the thickness of the flange, when the flange thickness decreases to a certain value, you need to spin round to fix otherwise it will affect the safe of the train.

The repair of well-set is adopted for the numerical control turning processing way, namely repair the wheel diameter to the required values through the numerical control turning when the wheel rim thickness decreases to a certain value. No further surface treatment after turning and the surface roughness value of the wheel rim after turning is generally about 6.3. The surface of the wheel is in a tensile stress state after turning, and the existence of tensile stress will make the wheel wear very fast at the initial stage, which greatly reduces the service life of the wheel.

### Contents of the invention

According to the disadvantages of the existing technology, this invention provides an ultrasonic machining method to improve the wear resistance of locomotive wheels.

The invention also provides the application of the above processing method.

### The technical scheme of the invention is as follows:

An ultrasonic machining method for improving the wear resistance of locomotive wheels, including of locomotive wheel rim ultrasonic machining, that is using the ultrasonic machining tool head to process the surface of the flange rotating along the main axis.

According to this invention, a better way to improve the locomotive wheel wear resistance with ultrasonic machining method including: while ultrasonic processing is performed on the rim of the locomotive wheel, the tread of the locomotive wheel is also subjected to ultrasonic machining, that is, ultrasonic processing is performed on the surface of the tread rotating along the main spindle by using an ultrasonic machining tool head.

According to this invention, the choice to get better results is: the locomotive wheel is a new locomotive wheel or a worn locomotive wheel.

According to this invention, the choice to get better results is: when the locomotive wheels are worn, ultrasonic machining of the wheel rim or tread of the locomotive wheels is processed after semi-finishing is performed.

According to this invention, the choice to get better results is: the wheel rim and/or tread of the locomotive wheels are semi-finished, which means make the surface roughness of the wheel rim or tread surface is 3.2-10 µm.

According to this invention, the choice to get better results is: the ultrasonic machining parameters are as follows, the rotation speed of the spindle is 5-45 r/min, the feed rate is 0.03-0.2 mm/r, the pressure of ultrasonic machining tool head on processing surface is 300-3000 N.

According to this invention, the choice to get better results is: the ultrasonic machining parameters are as follows, the rotation speed of the spindle is 19 r/min, the feed rate is 0.1 mm/r, the pressure of ultrasonic machining tool head to processing surface is 1200 N.

According to this invention, the choice to get better results is: when ultrasonic machining is performed on the surface of the rim rotating along the main shaft and the surface of the tread using an ultrasonic machining tool head, the number of rounds of the ultrasonic machining is 1-3 times.

According to this invention, the choice to get better results is: when ultrasonic machining is performed on the surface of the rim rotating along the main shaft and the surface of the tread using an ultrasonic machining tool head, the amplitude of the ultrasonic machining is 5-25 µm.

An application of using the above ultrasonic machining method to improve the wear resistance of locomotive wheels is:
Ultrasonic machining is performed on areas in which the locomotive wheels should be worn out. The parameters of the ultrasonic machining are: the rotation speed of the spindle is 5-45 r/min, the feed rate is 0.03-0.2 mm/r, and the pressure of ultrasonic machining tool head on processing surface is 300-3000 N.

According to this invention, the choice to get better results is: a semi-finishing process is performed before ultrasonic machining in the worn area, make the surface roughness of area to be processed is 3.2-10 µm.

According to this invention, the choice to get better results is: the ultrasonic machining parameters are as follows, the rotation speed of the spindle is 19 r/min, the feed amount is 0.1 mm/r, the pressure of ultrasonic machining tool head on processing surface is 1200 N.

### The advantages of this invention are:

The ultrasonic machining method described in this invention can solve the problem of serious friction wear and high repair cost. The ultrasonic machining method mentioned in the invention can not only process the locomotive wheel just after leaving factory, but also repair the worn locomotive wheel. After machining the rim and/or tread of the locomotive wheel with ultrasonic machining, the surface tensile stress of the rim and/or the tread surface will become compressive stress, the surface roughness will be greatly reduced, and the ideal compressive stress will be preset on the surface. Which will improves the hardness of the surface, refines the grain, significantly increases the wear resistance, improves the wheel-rail contact relationship, reduces the rolling contact fatigue damage of the wheelset, reduces the wear rate of the wheel, and prolongs the wheel repair cycle and service life.

### Description of figures

FIG. 1 is the processing diagram of the locomotive wheel by ultrasonic machining method.
FIG. 2 shows the schematic diagram of the area to be machined on the locomotive wheels, where the region with dashed lines is the area to be processed.
FIG. 3a, FIG. 3b, FIG. 3c, FIG. 3d, FIG. 3e are the metallographic image after ultrasonic machining of the processing surface by different ultrasonic machining pressure;

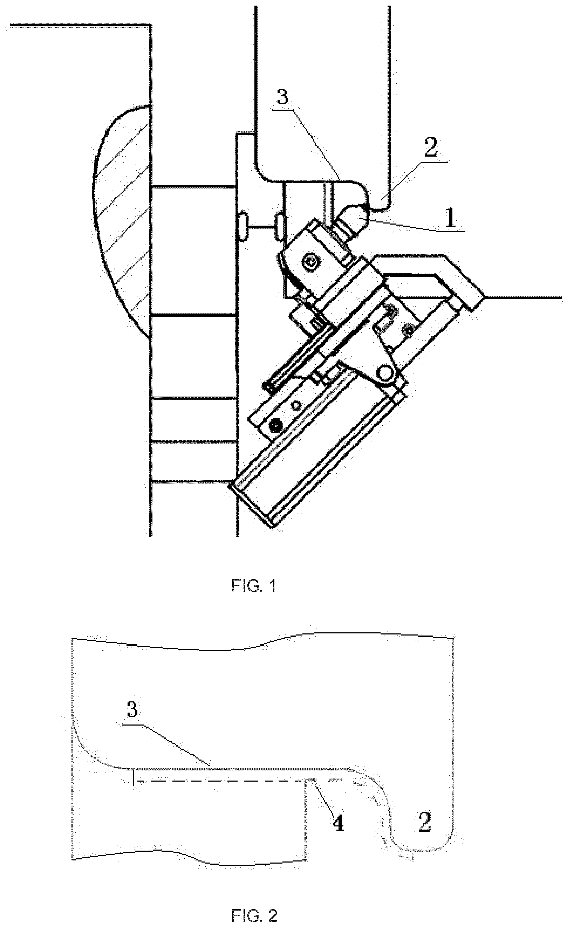

In FIG. 1 and FIG. 2, Label 1 means ultrasonic machining tool head, Label 2 means rim, Label 3 means read and the dotted line area in Label 4 refers to the area of ultrasonic processing.

### Description of the preferred embodiments

The following describes the present invention in detail with reference to the embodiments and the accompanying drawings, but is not limited thereto.

As shown in FIG. 1-2.

### Embodiment 1

An ultrasonic machining method for improving the wear resistance of locomotive wheels, including: ultrasonic machining of locomotive wheel rim 2, it is ultrasonic machining of the surface of the rim 2 which is rotating along the spindle with an ultrasonic machining tool head 1. The locomotive wheel is the factory-fresh locomotive wheel.

### Embodiment 2

As described in embodiment 1, an ultrasonic machining method to improve the wear resistance of locomotive wheels. The difference is that the ultrasonic machining parameters are: the rotation speed of the spindle is 5-45 r/min, the feed rate is 0.03-0.2 mm/r, the pressure of ultrasonic machining tool head on processing surface is 300-3000 N.

### Embodiment 3

As described in embodiment 1, an ultrasonic machining method to improve the wear resistance of locomotive wheels, the difference is that the locomotive wheel is worn.

When the locomotive wheels are worn out, the wheel rim 2 of the semi-finished locomotive wheels is processed by ultrasonic machining.

The wheel rim 2 of the locomotive wheel is semi-finished, make the surface roughness of the wheel rim 2 is 3.2-10 µm.

### Embodiment 4

As described in embodiment 1-3, an ultrasonic machining method to improve the wear resistance of locomotive wheels, the difference is that when the surface of the rim 2 rotating along the spindle is machined using an ultrasonic machining tool head 1, the number of ultrasonic machining is 1-3.

### Embodiment 5

As described in embodiment 1-3, an ultrasonic machining method to improve the wear resistance of locomotive wheels, the difference is that when the surface of the rim 2 rotating along the spindle is machined using an ultrasonic machining tool head 1, the amplitude of ultrasonic machining is 5-25 µm.

### Embodiment 6

An ultrasonic machining method for improving the wear resistance of locomotive wheels, including: ultrasonic machining of locomotive wheel rim 2 and tread 3, it is ultrasonic machining of the surface of the rim 2 and tread 3 which are rotating along the spindle with an ultrasonic machining tool head 1. The locomotive wheel is the factory-fresh locomotive wheel.

### Embodiment 7

As described in embodiment 6, an ultrasonic machining method to improve the wear resistance of locomotive wheels. The difference is that the ultrasonic machining parameters are: the rotation speed of the spindle is 5-45 r/min, the feed rate is 0.03-0.2 mm/r, the pressure of ultrasonic machining tool head on processing surface is 300-3000 N.

### Embodiment 8

As described in embodiment 1, an ultrasonic machining method to improve the wear resistance of locomotive wheels, the difference is that the locomotive wheel is worn.

When the locomotive wheels are worn out, the wheel rim 2 and tread 3 of the semi-finished locomotive wheels are processed by ultrasonic machining.

The wheel rim 2 and tread 3 of the locomotive wheel are semi-finished, make the surface roughness of the wheel rim 2 and tread is 3.2-10 µm.

### Embodiment 9

As described in embodiment 1-8, an ultrasonic machining method to improve the wear resistance of locomotive wheels. The difference is that the ultrasonic machining parameters are: the rotation speed of the spindle is 19 r/min, the feed rate is 0.1mm/r, the pressure of ultrasonic machining tool head 1 on processing surface is 1200 N.

As the present embodiment, the pressure of ultrasonic machining tool head on processing surface is: 100 N, 300 N, 1200 N, 3000 N and 3500 N respectively. The mean residual stresses of the wheel rim after processing are as follows:

| Sample/sample processing parameters | Average residual stress |
|---|---|
| Wheel rim without ultrasonic processing. | -17.68 |
| Ultrasonic processing pressure 100 N | -55.21 |
| Ultrasonic processing pressure 300 N | -98.7 |
| Ultrasonic processing pressure 1200 N | -176.07 |
| Ultrasonic processing pressure 3000 N | -212.93 |
| Ultrasonic processing pressure 3500 N | -277.04 |

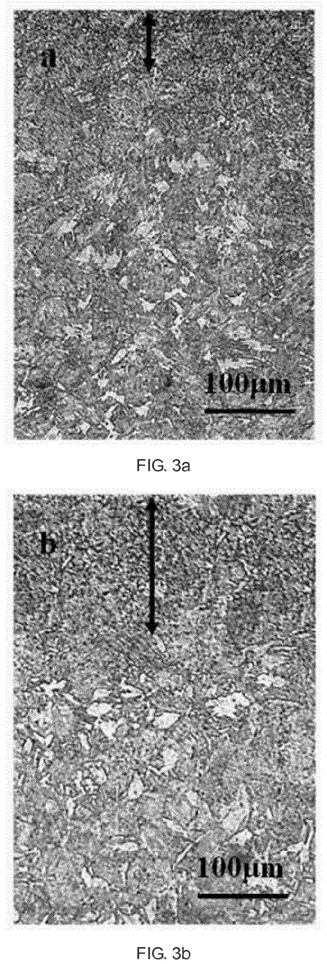

FIG. 3a is an equilibrium diagram of the rim surface when the ultrasonic processing tool head surface pressure is 100 N.

FIG. 3b is an equilibrium diagram of the rim surface when the ultrasonic processing tool head surface pressure is 300 N.

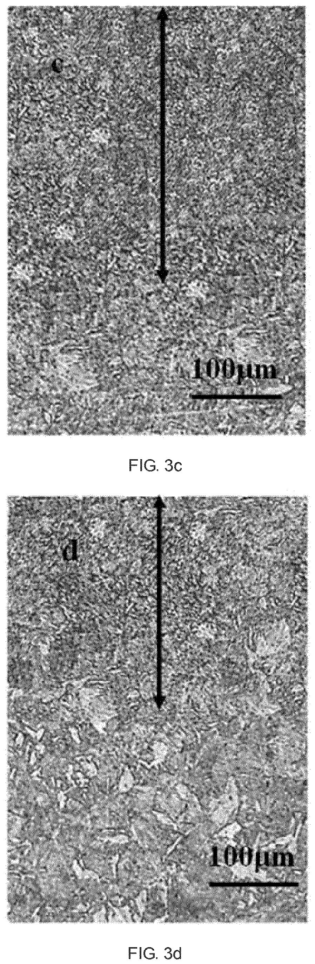

FIG. 3c is an equilibrium diagram of the rim surface when the ultrasonic processing tool head surface pressure is 1200 N.

FIG. 3d is an equilibrium diagram of the rim surface when the ultrasonic processing tool head surface pressure is 3000 N.

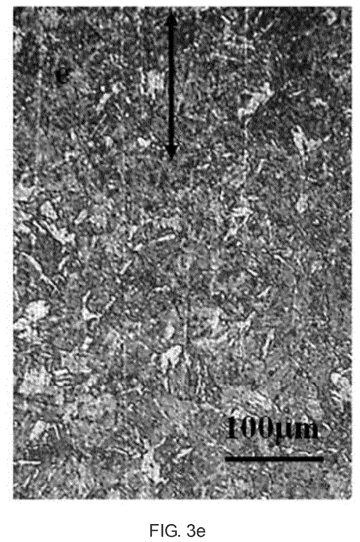

FIG. 3e is an equilibrium diagram of the rim surface when the ultrasonic processing tool head surface pressure is 3500 N.

### Embodiment 10

An application of the ultrasonic machining method to improve the wear resistance of locomotive wheels using the method describes in embodiment 1-9:
Ultrasonic machining is performed on areas in which the locomotive wheels should be worn out. The parameters of the ultrasonic machining are: the rotation speed of the spindle is 5-45 r/min, the feed rate is 0.03-0.2 mm/r, and the pressure of ultrasonic machining tool head on processing surface is 300-3000 N.

### Embodiment 11

As described in embodiment 10, an application of improve the wear resistance of locomotive wheels, the difference is that before the ultrasonic machining of the worn area, turning to semi-finishing, make its surface roughness is 3.2-10 µm.

### Embodiment 12

As described in embodiment 10, an application of improve the wear resistance of locomotive wheels, the difference is that the ultrasonic machining parameters are: the rotation speed of the spindle is 19 r/min, the feed rate is 0.1 mm/r, the pressure of ultrasonic machining tool head 1 on processing surface is 1200 N.

### Test comparison example:

The experimental comparison of the locomotive wheels after processing in the implementation example 9 is as follows:
In the process of ultrasonic machining on the surface of the locomotive wheels, the factors affecting the machining effects include spindle speed, feed rate, and pressure. The above three factors are used as test factors in this test and are denoted as A (corresponding to spindle speed), B (corresponding feed rate) and C (corresponding pressure).In this experiment, each factor has three levels, namely:
The corresponding three criteria for A (corresponding spindle speed) include: A₁=5 r/min, A₂=19 r/min, A₃=45 r/min.

The corresponding three criteria for B (corresponding feed rate) include: B₁=0.03 mm/r, B₂=0.1 mm/r, B₃=0.2 mm/r.

The corresponding three criteria for C (corresponding pressure) include: C₁=300 N, C₂=1200 N, C₃=3000 N.

**Table 1: test parameters of ultrasonic machining which is applied to abrasion resistance of locomotive wheels.**

| No. | Spindle speed (r/min) | Feed rate (mm/r) | Pressu re(N) | Surface roughness (µm) | Hardness (HL) | Hardness increase (HL) | Remark |
|---|---|---|---|---|---|---|---|
| 1 | 5 | 0.03 | 300 | 0.07 | 461 | 101 | |
| 2 | 5 | 0.03 | 1200 | 0.05 | 482 | 122 | |
| 3 | 5 | 0.03 | 3000 | 0.08 | 498 | 138 | |
| 4 | 5 | 0.1 | 300 | 0.09 | 452 | 92 | |
| 5 | 5 | 0.1 | 1200 | 0.06 | 495 | 135 | |
| 6 | 5 | 0.1 | 3000 | 0.09 | 505 | 145 | |
| 7 | 5 | 0.2 | 300 | 0.12 | 433 | 73 | |
| 8 | 5 | 0.2 | 1200 | 0.11 | 481 | 121 | |
| 9 | 5 | 0.2 | 3000 | 0.13 | 494 | 134 | |
| 10 | 19 | 0.03 | 300 | 0.06 | 460 | 100 | |
| 11 | 19 | 0.03 | 1200 | 0.05 | 485 | 125 | |
| 12 | 19 | 0.03 | 3000 | 0.06 | 495 | 135 | |
| 13 | 19 | 0.1 | 300 | 0.09 | 450 | 90 | |
| 14 | 19 | 0.1 | 1200 | 0.05 | 490 | 130 | Optimum |
| 15 | 19 | 0.1 | 3000 | 0.07 | 510 | 150 | |
| 16 | 19 | 0.2 | 300 | 0.12 | 435 | 75 | |
| 17 | 19 | 0.2 | 1200 | 0.09 | 485 | 125 | |
| 18 | 19 | 0.2 | 3000 | 0.10 | 499 | 139 | |
| 19 | 45 | 0.03 | 300 | 0.1 | 428 | 68 | |
| 20 | 45 | 0.03 | 1200 | 0.06 | 498 | 138 | |
| 21 | 45 | 0.03 | 3000 | 0.09 | 507 | 147 | |
| 22 | 45 | 0.1 | 300 | 0.1 | 456 | 96 | |
| 23 | 45 | 0.1 | 1200 | 0.06 | 485 | 125 | |
| 24 | 45 | 0.1 | 3000 | 0.08 | 492 | 132 | |
| 25 | 45 | 0.2 | 300 | 0.13 | 432 | 72 | |
| 26 | 45 | 0.2 | 1200 | 0.12 | 488 | 128 | |
| 27 | 45 | 0.2 | 3000 | 0.15 | 499 | 139 | |

The test data of table 1 shows that when A (corresponding spindle speed) is selected as A₂=19 r/min, B (corresponding feed rate) is selected as B₂=0.1 mm/r, and C (corresponding pressure) is selected as C₂=1200 N, the best surface roughness is obtained, hardness and the increase of hardness are also the highest value.

Combining the orthogonal test to analyze the above data to verify whether A (corresponding spindle speed) is selected as A₂=19 r/min, B (corresponding feed rate) is selected as B₂=0.1 mm/r, and C (corresponding pressure) is selected as C₂=1200 N, will obtain the best surface roughness, and hardness and the increase of hardness are also the highest value.

### Orthogonal test data analysis:

A₁=5 r/min, A₂=19 r/min, A₃=45 r/min.

The corresponding three criteria of B (corresponding feed rate) include: B₁=0.03 mm/r, B₂=0.1 mm/r, B₃=0.2 mm/r.

The corresponding three criteria of C (corresponding pressure) include: C₁=300 N, C₂=1200 N, C₃=3000 N.

**Table 2: table of three test factors**

| Level | Experimental factors | | |
|---|---|---|---|
| | Spindle speed (r/min) A | Feed rate (mm/r) B | Pressure (N) C |
| 1 | A₁=5 r/min | B₁=0.03mm/r | C₁=300N |
| 2 | A₂=19 r/min | B₂=0.1 mm/r | C₂=1200N |
| 3 | A₃=45 r/min | B₃=0.2 mm/r | C₃=3000N |

According to the orthogonal test data method, L₉(3⁴) or L₂₇(3¹³) can be used. Because the test only considers the influence of three factors on the machining effect of the wheel surface and does not consider the interaction between the factors, therefore, L₉(3⁴) orthogonal table was selected.

The orthogonal test scheme (table 3) was formed by filling the horizontal values of each factor in the orthogonal table of L₉(3⁴).

**Table 3: orthogonal test scheme**

| No. | Factors | | | Experimental result The total wear rate of rail and wheel (%) | |
|---|---|---|---|---|---|
| | Spindle speed(r/min) | Feed rate (mm/r) | Pressure (N) | Sliding wear | Rolling wear |
| 1 | 5 | 0.03 | 300 | 1.23 | 1.20 |
| 2 | 5 | 0.1 | 1200 | 0.83 | 0.85 |
| 3 | 5 | 0.2 | 3000 | 0.99 | 1.02 |
| 4 | 19 | 0.03 | 1200 | 1.04 | 1.02 |
| 5 | 19 | 0.1 | 3000 | 0.83 | 0.81 |
| 6 | 19 | 0.2 | 300 | 1.02 | 0.99 |
| 7 | 50 | 0.03 | 3000 | 1.14 | 1.12 |
| 8 | 50 | 0.1 | 300 | 1.03 | 1.09 |
| 9 | 50 | 0.2 | 1200 | 0.96 | 1.01 |

It can be seen from table 3 that the total wear rate of the rail and wheel is the smallest when spindle speed is 19 r/min, feed rate is 0.1 mm/r and pressure is 1200 N. In this case the horizontal combination is A₂B₂C₂.

### Analyze the results of the experiment

### 1. Analysis of the total wear rate of sliding wear, table 4.

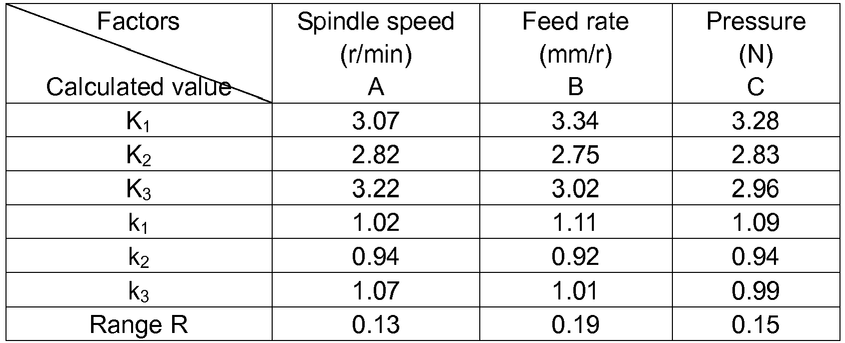

For the spindle speed A, it can be seen that k₃>k₁>k₂. Since the result index is the wear rate, the minimum value of the wear rate is expected, so it can be judged that A₂ is the excellent level of factor A.

In the same way, the excellent levels of factor B and factor C are B₂ and C₂ respectively. So the optimal combination is A₂B₂C₂.In addition, it can be seen from the value of the range R that factor B has the greatest influence on the sliding wear rate among the three experimental factors.

### 2. Analysis of the total wear rate of rolling wear, table 5.

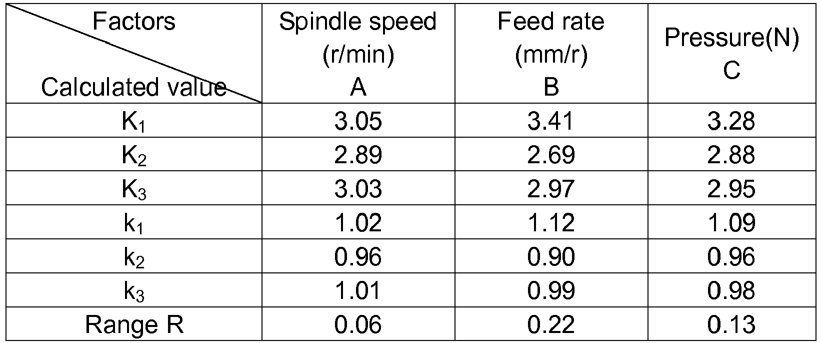

For the spindle speed A, it can be seen that k₃>k₁>k₂. Since the result index is the wear rate, the minimum value of the wear rate is expected, so it can be judged that A₂ is the excellent level of factor A.

In the same way, the excellent levels of factor B and factor C are B₂ and C₂ respectively. So the optimal combination is A₂B₂C₂. In addition, it can be seen from the value of the range R that factor B has the greatest influence on the rolling wear rate among the three experimental factors.

According to the analysis results of sliding wear rate and the results of rolling wear rate, the optimal combination is A₂B₂C₂, therefore, the workpiece processed by A₂B₂C₂ corresponding parameters was selected for the friction and wear test. The test results show that after surface treatment, the wear resistance of wheels sample in both the rolling wear and sliding wear test are improved by more than 50%. At the same time, the wear rate of rail specimens after surface treatment with wheel specimens is also significantly reduced.

## Claims

1. An ultrasonic machining method for improving the wear resistance of locomotive wheels, its characteristic is that the method includes of locomotive wheel rim ultrasonic machining, that is using the ultrasonic machining tool head to process the surface of the rim rotating along the main axis.

2. An ultrasonic machining method for improving the wear resistance of locomotive wheels according to claim 1, its characteristics is that while ultrasonic processing is performed on the rim of the locomotive wheel, the tread of the locomotive wheel is also subjected to ultrasonic machining, that is, ultrasonic processing is performed on the surface of the tread rotating along the main spindle by using an ultrasonic machining tool head.

3. An ultrasonic machining method for improving the wear resistance of locomotive wheels according to claim 1 and claim 2, its characteristics is that the locomotive wheel is a new locomotive wheel or a worn locomotive wheel.

4. An ultrasonic machining method for improving the wear resistance of locomotive wheels according to claim 1 and claim 2, its characteristic is that when the locomotive wheels are worn, ultrasonic machining of the wheel rim or tread of the locomotive wheels is processed after semi-finishing is performed.

5. An ultrasonic machining method for improving the wear resistance of locomotive wheels according to claim 1 and claim 2, its characteristic is that the wheel rim and/or tread of the locomotive wheels are semi-finished, which means make the surface roughness of the wheel rim or tread surface is 3.2-10µm.

6. An ultrasonic machining method for improving the wear resistance of locomotive wheels according to claim 1 and claim 2, its characteristic is that the parameters of the ultrasonic machining are: the rotation speed of the spindle is 5-45 r/min, the feed rate is 0.03-0.2 mm/r, the pressure of ultrasonic machining tool head on processing surface is 300-3000 N.

7. An ultrasonic machining method for improving the wear resistance of locomotive wheels according to claim 1 and claim 2, its characteristic is that the parameters of the ultrasonic machining are: the rotation speed of the spindle is 19 r/min, the feed rate is 0.1 mm/r, the pressure of ultrasonic machining tool head on processing surface is 1200 N.

8. An ultrasonic machining method for improving the wear resistance of locomotive wheels according to claim 1 and claim 2, its characteristic is that when ultrasonic machining is performed on the surface of the rim rotating along the main shaft and the surface of the tread using an ultrasonic machining tool head, the number of rounds of the ultrasonic machining is 1-3 times.

9. An ultrasonic machining method for improving the wear resistance of locomotive wheels according to claim 1 and claim 2, its characteristic is that when ultrasonic machining is performed on the surface of the rim rotating along the main shaft and the surface of the tread using an ultrasonic machining tool head, the amplitude of the ultrasonic machining is 5-25µm.

10. An application of ultrasonic machining method to improve the wear resistance of locomotive wheels According to claim 1 or 2:
Ultrasonic machining is performed on areas in which the locomotive wheels should be worn out. The parameters of the ultrasonic machining are: the rotation speed of the spindle is 5-45r/min, the feed amount is 0.03-0.2mm/r, and the pressure of ultrasonic machining tool head on processing surface is 300-3000N.
The choice to get better results is: a semi-finishing process is performed before ultrasonic machining in the worn area, make the surface roughness of area to be processed is 3.2-10µm. The ultrasonic machining parameters are as follows, the rotation speed of the spindle is 19 r/min, the feed rate is 0.1 mm/r, the pressure of ultrasonic machining tool head on processing surface is 1200 N.
